# EUROPÄISCHE PATENTSCHRIFT

(11) **EP 0 819 376 B1**
(45) Veröffentlichungstag und Bekanntmachung des Hinweises auf die Patenterteilung: **04.07.2001**
(21) Anmeldenummer: 97106284.9
(22) Anmeldetag: 16.04.1997
(51) Int. Cl.: A01F 15/14

(54) **Rundballenpresse**
Roundbaler
Presse à balles rondes

(30) Priorität: 18.07.1996 DE 29612503 U
(43) Veröffentlichungstag der Anmeldung: 21.01.1998
(73) Patentinhaber: Kverneland Geldrop B.V., 5660 AA Geldrop (NL)
(72) Erfinder: Van den Wildenberg, Leonardus, 6021 CT Budel (NL)
(74) Vertreter: Grünecker, Kinkeldey, Stockmair & Schwanhäusser Anwaltssozietät

(56) Entgegenhaltungen:
- EP-A- 0 217 714
- US-A- 4 174 661

## Beschreibung

Die Erfindung betrifft eine Rundballenpresse der im Oberbegriff des Patentanspruchs 1 angegebenen Art.

Bei bekannten Rundballenpressen mit Garnbindevorrichtung existieren unterschiedliche kinematische Systeme zum Bewegen des oder der Garnführer entlang des Rundballens. Bei einem System werden wenigstens zwei rohrförmige Garnführer scheibenwischerartig, gegebenenfalls sogar einander überkreuzend, verschwenkt, wobei sie nach dem Bindevorgang in Ruhestellungen anlangen, in denen sie annähernd parallel zur Achse des Rundballens stehen. Ihre Auslässe liegen dann im Bereich der Enden des Rundballens. Bei einem gatüngsgemäßen System gemäß EP-A 0 217 714 werden annähernd senkrecht zur Achse des Rundballens ausgerichtete Garnführer parallel zu sich selbst bewegt, bis sie Ruhepositionen im Bereich der Enden des Rundballens einnehmen. Zum Abschneiden des Garns existieren unterschiedliche Schneidvorrichtungen. Jeder Garnführer des erstgenannten Systems schlägt vor Erreichen seiner Ruheposition gegen einen Betätigungshebel eines Antriebs, der die Schneidklinge in den Garnlaufweg schwenkt. Gemäß EP-A0 217 714 trägt jeder Garnführer eine fest augebrachte Schneidklinge, die das Garn des jeweils anderen Garnführers abtrennt. Schneidvorrichtungen mit angetriebenen Schneidklingen sind baulich aufwendig, teuer und benötigen viel Einbauraum. Die Schneidklingen verschleißen schnell. Bei den gegenseitig ihre Garne abschneidenden Fadenführern liegen die gebildeten freien Garnenden. unerwünscht in einem Mittelbereich des Rundballens. Ferner verschleißen die Schneidklingen aufgrund eines relativ langsamen und lange dauernden Eingriffs mit dem rasch laufenden, rauhen Garn frühzeitig. Auch kann die Kinematik der Garnführerbewegung ungünstig sein. Bei den bekannten Schneidvorrichtungen ergibt sich außerdem konstruktionsbedingt der Nachteil einer Verschmutzung der freiliegenden Schneidklinge, die deren Wirksamkeit mindert und zu unsauberen Schnitten führt.

Bei einer aus US-A-41 74 661 bekannten Rundballenpresse erfolgt die Steuerung des Garnführers mittels eines Arbeitszylinders. Mit dem Auslaßbereich des Garnführers ist ein Schneidmechanismus funktionell gekoppelt, der über einen Lenkermechanismus in Abhängigkeit von der durch den Arbeitszylinder bewirkten Bewegung des Garnführers betätigt wird und die schneidklinge relativ zum Auslaß des garnführer verschwenkt, um das gespannte Garn abzutrennen. Die Schneidvorrichtung wird kurz vor Erreichen der Ruhestellung des Garnführers betätigt.

Der Erfindung liegt die Aufgabe zugrunde, eine Rundballenpresse der eingangs genannten Art zu schaffen, bei der das Garn mit baulich geringem Aufwand sauber und in einem optimalen Bereich des Rundballens abschneidbar ist, und bei der die Schneidklinge wenig verschleißt und kaum verunreinigt wird.

Die gestellte Aufgabe wird mit den im Patentanspruch 1 enthaltenen Merkmalen gelöst.

Die am Garnführer in einer festen Position angeordnete Schneidklinge schneidet das aus dem Auslaß dieses Garnführers austretende Garn zügig. Die Schneidvorrichtung ist baulich außerordentlich einfach und robust, und baut sehr klein. Da die Schneidklinge nur bei einer bestimmten Umlenkung des Garns relativ zum Auslaß zum Eingriff kommt, und zwar ohne eigenen Antrieb, und über den weiteren Bewegungsweg des Garnführers vom Garn nicht berührt wird, und aufgrund des zügigen Schnitts, bleibt der Verschleiß der Schneidklinge gering. Durch die ständige Bewegung des Auslasses, den Luftstrom des Garnes und den zügigen Schnitt tritt ein Selbstreinigungseffekt der Klinge ein, so daß keine Verschmutzungen die Schnittqualität beeinträchtigen. Besonders zweckmäßig läßt sich die Position des Garnschnittes in bezug auf den Rundballen (z.B. bei den Endwindungen) optimal wählen, d.h. daß die freien Enden der Garne in günstigen Lagen auf dem Rundballen liegen.Ggfs wird die Umlenkung des Garns aufgrund der Schwenkbewegung des Garnführers zusätzlich verstärkt oder beschleunigt durch das Umlenkelement, das das Garn zu einem exakt vorherbestimmbaren Zeitpunkt bzw. an einer exakt vorherbestimmbaren Position gegen die Schneidklinge bringt.

Günstig ist ferner, daß nach dem Schnitt nur ein kurzes freies Garnende am Garnführer vorliegt.

Anspruch 2 ist besonders wichtig (eigenständige erfinderische Bedeutung). Durch die Einrichtung zum Beschleunigen der Umlenkung des Garns wird nämlich der Schnitt besonders zügig durchgeführt, was die Schneidklinge schont und saubere Garnenden schafft. Die Einrichtung läßt sich am Garnführer anbringen oder getrennt von diesem anordnen. Es ist auch möglich, sowohl am Garnführer als auch getrennt von diesem kooperierende, baulich einfache und verschmutzungsunanfällige Einrichtungsteile zum für das Abtrennen vorübergehenden Beschleunigen der Umlenkung des Garnes vorzusehen.

Gemäß Anspruch 3 wird die Schwenkbewegung des Garnführers dazu eingesetzt, das aus dem Auslaß austretende Garn gezielt an die Schneidklinge zu lenken.

Gemäß Anspruch 4 wird der Garnführer zu sich parallel bewegt. Dabei sorgt das Umlenkelement für die zum zügigen Schnitt führende Umlenkung des aus dem Auslaß austretenden Garns.

Gemäß Anspruch 5 wird der Garnführer bis über die Position des Umlenkelements hinaus bewegt, um das Garn zweifach abgestützt gegen die Schneidklinge zu führen.

Gemäß Anspruch 6 wird das Umlenkelement gegensinnig zum Garnführer bewegt, um eine starke und rasche Umlenkung des Garns bis zum Schnitt zu erzeugen.

Günstige Schnittverhältnisse ergeben sich gemäß Anspruch 7. Eine geradlinige, relativ lange Schneidkante, die nicht nur punktuell, sondern sozusagen ziehend eingreift, führt zu einer hohen Standzeit der Schneidklinge.

Gemäß Anspruch 8 schützt das Garnwiderlager die Schneidkante und das Garn solange gegen unerwünschten gegenseitigen Kontakt, bis der Schnitt durchzuführen ist. Erst wenn das Garn relativ zum Auslaß so weit umgelenkt ist, daß es unter der Zugkraft des Rundballens entlang des schrägen Abgleitflankenteils abgleitet, kommt es zum Schnitt, wobei diese Abgleitbewegung bis zum Schnitt in einen beschleunigten Eingriff der Schneidklinge in das Garn führt.

Gemäß Anspruch 9 ist der Umlenkwinkel exakt vorherbestimmt, bei dem das Garn geschnitten wird. Nach dem seitlichen Versetzen beim Abgleiten am Abgleitflankenteil fällt das gespannte Garn direkt auf die Schneidkante. Es wird unter dem Zug des Rundballens der Schneidkante entlang gezogen und geschnitten. Es kommt zu einem gezogenen, sauberen Schnitt. Die Schneidleistung der Schneidklinge wird auf zumindest einen Teil der Länge der Schneidkante verteilt.

Herstellungstechnisch einfach ist gemäß Anspruch 10 ein Rundbolzen oder ein Rohrstück. Bereits aufgrund des runden Umfangs sind in der geometrischen Anordnung in bezug auf die Schneidkante das Abgleitflankenteil und der Abweiseflankenteil vereinigt.

Eine robuste Ausführungsform geht aus Anspruch 11 hervor.

Gemäß Anspruch 12 kann die Schneidvorrichtung auch nachträglich an einem bereits im Betrieb gewesenen Fadenführer angebracht werden. Ferner ist es möglich, die Position der Schneidklinge ein- oder nachzustellen, und kann herstellungstechnisch günstig ein einziger Typ der Schneidvorrichtung an beiden Fadenführern verwendet werden.

Anhand der Zeichnung werden Ausführungsformen des Erfindungsgegenstandes erläutert. Es zeigen:
- Fig. 1: einen schematischen Vertikalschnitt einer Rundballenpresse,
- Fig. 2: einen Teilschnitt einer anderen Ausführungsform einer Rundballenpresse,
- Fig. 3: schematisch einen Teil einer Garnbindevorrichtung mit Schneidvorrichtung, in unterschiedlichen Betriebsphasen, einschließlich einer Detailvariante,
- Fig.4 u.5: zwei einander zugeordnete Detailansichten, und
- Fig. 6: schematisch eine weitere Detailvariante.

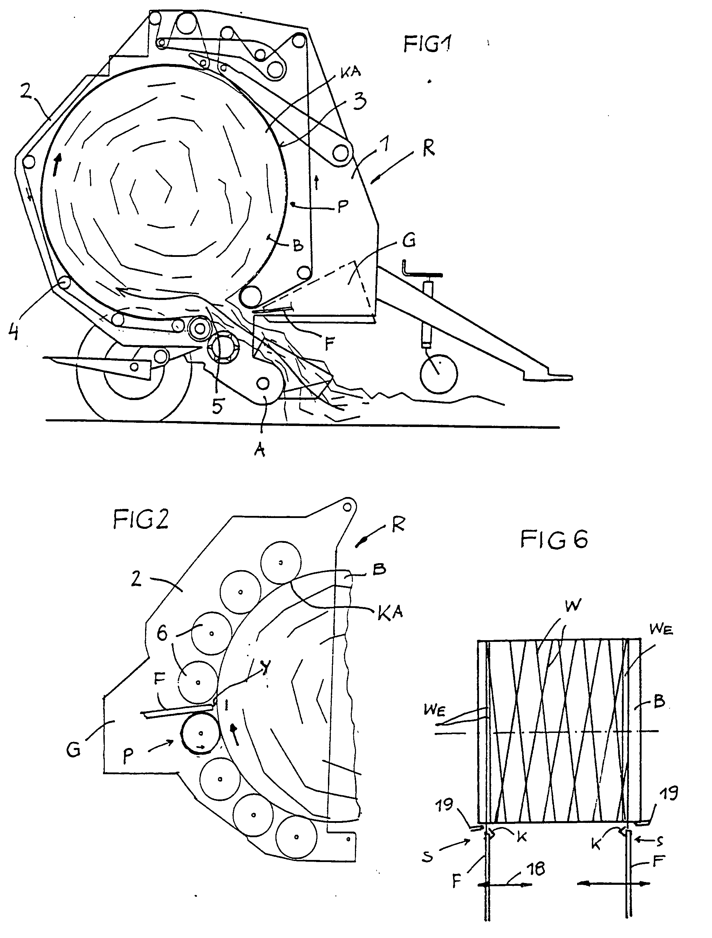

Eine Rundballenpresse R gemäß Fig. 1 weist in einem Gehäuse 1 mit Auswurfklappe 2 eine Preßkammer KA zum Wickeln eines Rundballens B auf. Die Preßkammer KA ist begrenzt von Preßelementen P, und zwar in Fig. 1 von auf Stützrollen 4 abgestützten Preßriemen 3, die in Pfeilrichtung angetrieben sind. Zur Preßkammer führt eine Zuführöffnung 5 für von einer Aufnahmevorrichtung A aufgenommenes Erntegut. Z.B. nahe der Zuführöffnung 5 ist im Gehäuse 1 eine Garnbindevorrichtung G mit wenigstens einem beweglichen Garnführer F angeordnet. Mit dem Garnführer F wird nach Fertigstellung des Rundballens B ein Garn Zugefuhrt, in das sich der Rundballen B (in Fig. 1 nicht gezeigt) in mehreren Windungen, vorzugsweise überkreuzenden Windungen, einwickelt. Das Garn wird, z.B. durch die Zuführöffnung 5 zwischen Preßelemente P und den Umfang des Rundballens B eingebracht, vom rotierenden Rundballen B mitgenommen, und mittels des Garnführers F mit einer zur Achse des Rundballens B parallelen Bewegungskomponente hin- und herbewegt.

Fig. 2 zeigt einen Teilschnitt einer anderen Ausführungsform einer Rundballenpresse R, bei der die Preßkammer KA von angetriebenen Preßwalzen 6 begrenzt wird, die die Preßelemente darstellen. Die Garnbindevorrichtung G ist an der Auswurfklappe 2 angeordnet. Der oder die Garnführer F greifen in einen Zwischenraum zwischen benachbarten Preßwalzen 6 ein, um das Garn Y zum Rundballen B zu führen. Die Garnbindevorrichtung G könnte auch an anderer Stelle als gezeigt vorgesehen sein.

Die in Fig. 1 und 2 nur angedeuteten Rundballenpressen können entweder mit einer im Volumen variablen Preßkammer K oder mit einer Preßkammer K mit festem Volumen arbeiten.

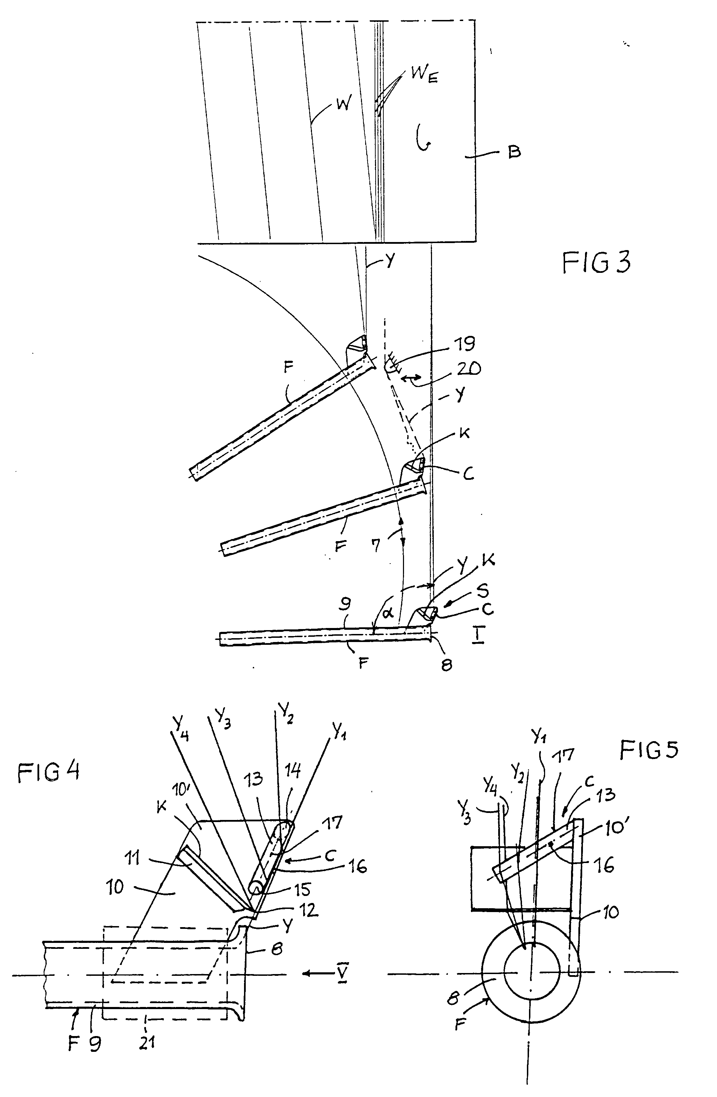

Fig. 3 verdeutlicht schematisch einen Teil der Garnbindevorrichtung G, die im Regelfall mit zwei Garnführern F ausgestattet ist, welche scheibenwischerartig und einander überkreuzend relativ zum sich drehenden Rundballen B bewegt werden. Es könnten mehr als zwei Garnführer vorgesehen sein. Die Garnzuführung und der Bewegungsantrieb jedes Garnführers F sind konventionell. Mit dem Garnführer F werden spiralförmige, zweckmäßigerweise einander überkreuzende Windungen W des Garns Y in einem mittleren Längsbereich des Rundballens B gebildet, und zueinander in etwa parallele und dicht beieinanderliegende bzw. einander überkreuzende Endwindungen WE im Endbereich des Rundballens. Am Garnführer F, der hier als das durchlaufende Garn Y aufnehmendes Rohr mit einem endseitigen, zweckmäßigerweise aufgeweiteten Auslaß 8 ausgebildet ist, ist eine Schneidvorrichtung S fest angebracht, die zumindest eine in einer festen Position in bezug auf den Auslaß 8 angeordnete Schneidklinge K aufweist. Die Schneidklinge K ist so positioniert, daß beim Verschwenken des Fadenführers in die Ruhestellung, die gleichzeitig eine Schneidposition I ist (Fig. 3, unterste annähernd horizontale Lage), das Garn Y durch die dann bewirkte Umlenkung relativ zum Auslaß 8 (Winkel α von ca. 90°), gegen die Schneidklinge K anläuft und abgetrennt wird. Die Schwenkbewegung des Garnführers F ist mit einem Doppelpfeil 7 angedeutet. Innerhalb des hauptsächlichen Schwenkbereichs berührt das zum Rundballen B laufende Garn Y die Schneidklinge K nicht. Die Bewegungssteuerung des Garnführers F kann konstruktiv so ausgelegt werden, daß der letzte Teil der Schwenkbewegung, etwa von der mittleren gezeigten Position des Fadenführers bis in die Schneidposition I, sehr rasch bzw. rascher als die restliche Schwenkbewegung, abläuft, damit sich ein zügiger Schnitt für das Garn ergibt.

Zusätzlich kann eine Einrichtung zum vorübergehenden Beschleunigen der Umlenkung des Garns relativ zum Auslaß 8 vorgesehen sein. Bei dem in der Schneidposition I gezeigten Fadenführer F ist zu diesem Zweck ein Garn-Widerlager C hinter der Schneidklinge K vorgesehen, das die Aufgabe hat, bis zum Erreichen einer vorbestimmten Garnumlenkung relativ zum Auslaß 8 das Garn Y an einem direkten Kontakt mit der Schneidklinge K zu hindern, und erst ab einem bestimmten Umlenkwinkel und dann verstärkt bzw. beschleunigt das Garn gegen die Schneidklinge K anlaufen zu lassen. Im Detail ist das Garn-Widerlager C und seine Zuordnung zur Schneidklinge K aus den Fig. 4 und 5 ersichtlich.

Als anderer Einrichtungsteil zum Beschleunigen der Umlenkung kann gemäß Fig. 3 ein Umlenkelement 19 vorgesehen sein, das das Garn Y abfängt, wenn sich der Garnführer F der Schneidposition nähert, so daß dann bei der weiteren Bewegung des Garnführers F die Umlenkung des Garns Y relativ zum Auslaß 8 momentan verstärkt oder beschleunigt wird. In Fig. 3 ist ersichtlich, daß mittels des Umlenkelementes 19 mit derselben Anordnung der Schneidklinge K das Garn Y bereits in der Mittelstellung des Garnführers F an der Schneidklinge K abgetrennt wird, und der Garnführer F zum Abschneiden nicht in die horizontale Ruheposition bewegt zu werden braucht. Die beiden Maßnahmen, d.h. das Garnwiderlager C und das Umlenkelement 19 können gemeinsam oder alternativ vorgesehen sein. Ferner ist es denkbar, das Umlenkelement 19 beweglich (Pfeil 20) anzuordnen, um die relative Umlenkung zwischen dem Auslaß 8 und dem Garn Y noch mehr zu verstärken oder zu beschleunigen.

Gemäß den Fig. 4 und 5 (Fig. 5 ist eine Ansicht in Blickrichtung V in Fig. 4) hat der Garnführer F ein rohrartiges Auslaßende 9 mit dem aufgeweiteten Auslaß 8. Außen ist am Auslaßende 9 die Schneidvorrichtung S angebracht, z.B. angeschweißt. Sie besteht aus einer die Schneidklinge K tragende Konsole 10 (ein Flacheisen), die sich annähernd tangential zum Auslaßende 9 erstreckt. Zweckmäßigerweise ist die Schneidklinge K verstellbar und/oder austauschbar auf einem Querteil 11 befestigt, der senkrecht und derart von der Konsole 10 absteht, daß die Schneidklinge K bei stärkster Garn-Umlenkung in etwa den Umlenkwinkel α zwischen der Achse des Auslaßendes 9 und dem Garn halbiert. Es könnte auch eine zweite Konsole 10 an der anderen Seite des Auslaßendes 9 vorgesehen sein, um sicherzustellen, daß das Garn nicht versehentlich die Schneidklinge umgeht.

Die Konsole 10 ist mit einer bezüglich des Auslasses 8 außermittigen Stützlasche 10' verlängert, an der das anhand von Fig. 3 erwähnte Garnwiderlager C angebracht ist. Bei der gezeigten Ausführungsform ist das Garnwiderlager C ein mit seinem dem Auslaß 8 fernen Ende 14 an der Stützlasche 10' befestigter Rundbolzen 13 oder ein Rohrstück mit kreisrundem oder gewölbtem Außenumfang. Der Rundbolzen 13 ist, z.B. festgeschweißt, und verläuft schräg zur Schneidklinge K hin. In der Draufsicht auf die Konsole 10 gemäß Fig. 3 schließt die Achse des Rundbolzens 13 mit der Achse des Auslaßendes 9 einen spitzen Winkel 90° ein. Es ist denkbar, die Achse des Rundbolzens 13 sogar annähernd senkrecht zur Achse des Auslaßendes 9 auszurichten. In Fig. 5 ist die Achse des Rundbolzens 13 ferner spitzwinklig, z.B. unter ca. 45°, gegenüber der Konsole 10 zur Schneidklinge K hin geneigt. Das andere, freie Ende 15 des Rundbolzens 13 liegt innerhalb der Längserstreckung einer geradlinigen und in Fig. 4 annähernd senkrecht zur Zeichenebene verlaufenden Schneidkante 12 der Schneidklinge K. Der Zwischenabstand zwischen dem freien Ende 15 und der Oberseite der Schneidklinge K sollte mindestens so groß sein wie die Stärke des Garns Y. Der in Fig. 5 gezeigte Winkel zwischen der Achse des Rundbolzens 13 und der Konsole 10 könnte auch größer oder kleiner als dargestellt sein. Ferner könnte der Rundbolzen 13 in Fig. 5 nach unten gebogen verlaufen.

Der Umfang des Rundbolzens 13 bildet eine Führungsflanke bestehend aus einem Abweiseflankenteil 16 und einem Abgleitflankenteil 17.

Nimmt die relative Umlenkung des Garns bei der Schwenkbewegung des Garnführers F gegenüber dem Auslaß 8 zu, bis das Garn in Richtung Y1 verläuft, dann stützt sich das Garn zunächst am Abweiseflankenteil 16 ab, ohne die Schneidkante 12 berühren zu können. Bei zunehmender Umlenkung Y2 wird das Garn durch die Schräglage des Abgleitflankenteils 17 am Rundbolzen 13 umgelenkt, ebenfalls noch ohne die Schneidkante 12 zu berühren. Durch den im Garn wirksamen Zug entsteht allerdings auf dem abfallenden Abgleitflankenteil 17 eine Kraftkomponente in Richtung zum freien Ende 15, mit der das Garn schließlich entlang des Abgleitflankenteils 17 gleitet. In der Position Y3 ist das Garn bereits nahe beim freien Ende 15 angelangt. Es berührt jedoch die Schneidkante 12 noch nicht. Bei Aufrechterhaltung des Zugs im Garn und gegebenenfalls bei weiterer Umlenkung gleitet das Garn schließlich über das freie Ende 15 hinweg und springt auf die Schneidkante 12, an der es unter dem wirkenden Zug rasch abgetrennt wird. Beim Schnitt bewegt sich das Garn ggfs. der Schneidkante 12 entlang. Dadurch wird der Verschleiß für die Schneidkante 12 gering gehalten, grob verteilt, und stört selbst eine stumpfe Kantenstelle nicht.

In Fig. 5 ist das Garn aus seiner Laufrichtung Y1 durch die Einflußnahme des schrägen Abgleitflankenteils 17 allmählich nach links über Y2 bis in die Position Y3 verlagert, ehe es abgleitet und direkt auf die Schneidkante 12 fällt, und dieser entlang gegebenenfalls wieder nach rechts in Richtung zur ursprünglichen Lage Y1 bewegt wird. Dadurch entsteht ein ziehender und rascher Schnitt. Zweckmäßigerweise ist die Schneidkante 12 geringfügig hinter die Ebene zurückgesetzt, die durch den Rand des Auslasses 8 und den Abweiseflankenteil 16 definiert ist. Damit ist sichergestellt, daß das laufende Garn die Schneidkante 12 erst dann berührt, wenn der Schneidvorgang durchzuführen ist, und nicht schon vorher verschleißend an der Schneidkante reibt.

Zusätzlich zum Garnwiderlager C gemäß den Fig. 4 und 5 könnte auch das stationäre oder bewegliche Umlenkelement 19 der Fig. 3 vorgesehen sein. Strichliert ist in Fig. 4 angedeutet, daß die Konsole 10 nicht direkt am Auslaßende 9 befestigt, sondern an einer Manschette 21 angebracht wird, die einstellbar und abnehmbar am Auslaßende 9 vorgesesehen ist. Die Manschette 21 ist zweckmäßigerweise teilbar, um die Montage zu vereinfachen.

In Fig. 6 ist eine Ausführungsvariante angedeutet, bei der die beiden Garnführer F in Richtung von Doppelpfeilen 18 zu sich selbst parallel hin- und herbewegt werden, um die sich überkreuzende Windungen W und Endwindungen WE auf dem Rundballen B zu formen. An den Garnführern F sind die Schneidklingen K in festen Positionen so angeordnet, daß sie erst bei einer bestimmten relativen Umlenkung des Garns am Auslaß jedes Fadenführers trennend eingreifen. Die Umlenkung wird erzeugt durch Umlenkelemente 19, die in den Laufweg der Garne Y eingreifen, wenn die Garnführer F über die Positionen der Umlenkelemente 19 hinaus und/oder die Umlenkelemente 19 gesteuert nach innen bewegt werden. Auch bei dieser Ausführungsform können die Garnwiderlager C der Fig. 3 bis 5 vorgesehen sein.

## Patentansprüche

1. Rundballenpresse (R) mit einer Presskammer (KA) und einer wenigstens einen zu einer hin- und hergehenden Bewegung mit zumindest zur Achse der Presskammer in etwa paralleler Bewegungskomponente antreibbaren Garnführer (F) aufweisenden Garnbindevorrichtung (G), mit der zumindest ein in die Presskammer (KA) eingeführtes Garn (Y) auf einen in der Presskammer rotierenden Rundballen (B) aufbringbar ist, und mit einer Garn-Schneidvorrichtung (S), in der wenigstens eine am Garnführer (F) in einer festen Position angeordnete Schneidklinge (K) durch die Bewegung des Garnführers (F) in einer festen Position angeordnete Schneidklinge (K) durch die Bewegung des Garnführers bis eine vorbestimmte Schneidposition zum trennenden Eingriff in den Garnlaufweg zum Rundballen bringbar ist, **dadurch gekennzeichnet,** dass die Schneidklinge (K) in ihrer festen Position am Garnführer (F) mit einer Schneidkante (12) zum aus diesem Garnführer austretenden Garn (Y) weist, dass das Garn (Y) mittels des angetriebenen Garnführers (F) selbst oder/und eines auf den Bewegungsweg des Garns mit seinem Garnführer ausgerichteten Umlenkelementes (19) relativ zu einem Auslass (8) des Garnführers (F) umlenkbar ist und dass das aus diesem Garnführer austretende Garn (Y) an der Schneidklinge (K) ausschließlich durch eine vorbestimmte Garnumlenkung relativ zum Auslass (8) zum trennenden Eingriff bringbar ist.

2. Rundballenpresse nach Anspruch 1, **dadurch gekennzeichnet,** dass dem Garnführer (F) eine Einrichtung (C,19) zum vorübergehenden Beschleunigen der Umlenkung des Garns (Y) relativ zum Auslass (8) zugeordnet ist.

3. Rundballenpresse nach Anspruch 1, **dadurch gekennzeichnet,** dass der Garnführer (F) relativ zum Rundballen (B) bis in die Schneidposition (I) verschwenkbar ist.

4. Rundballenpresse nach Anspruch 1, **dadurch gekennzeichnet,** dass der Garnführer (F) im Wesentlichen parallel zu sich selbst in Achsrichtung des Rundballens (B) und relativ zum Umlenkelement (19) für das Garn (Y) bis in die Schneidposition bewegbar ist.

5. Rundballenpresse nach Anspruch 1, **dadurch gekennzeichnet,** dass das Umlenkelement (19) stationär in einer vorbestimmten Position angeordnet ist, und dass der Garnführer (F) mit seinem Auslass (8) bis über die Position des Umlenkelements (19) hinaus in die Schneidposition bewegbar ist.

6. Rundballenpresse nach Anspruch 1, **dadurch gekennzeichnet,** dass das Umlenkelement (19) gegensinnig zum Garnfüher (F) bewegbar ist.

7. Rundballenpresse nach Anspruch 1, **dadurch gekennzeichnet,** dass die Schneidklinge (K) in einer Ebene angeordnet ist, die in der Schneidposition den Umlenkwinkel (a) zwischen der Längsachse des Fadenführers (F) und der Achse des aus dem Auslass (8) austretenden Garns (Y) in etwa halbiert.

8. Rundballenpresse nach Anspruch 2, **dadurch gekennzeichnet,** dass an der dem Auslass (8) abgewandten Seite der Schneidklinge (K) ein Garn-Widerlager (C) mit einer Führungsflanke vorgesehen ist, die einen - in Blickrichtung vom Auslass (8) über die Schneidkante (12) - annähernd zur Schneidkante parallelen Abweiseflankenteil (16) und - in Blickrichtung entlang der Längsachse des Fadenführers (f) - einen relativ zur Schneidkante (12) schrägen Abgleitflankenteil (17) aufweist, wobei, vorzugsweise, der Abweiseflankenteil (16) geringfügig gegenüber der Schneidkante (12) vortritt.

9. Rundballenpresse nach Anspruch 8, **dadurch gekennzeichnet,** dass das Garn-Widerlager (C) mit seinem der Schneidkante (12) näheren Ende (15) frei auskragend festgelegt ist und sich höchstens über die Länge der Schneidkante (12) erstreckt, und dass das freie Ende (15) des Garn-Widerlagers (C) in einem Abstand von der Schneidklinge (K) liegt, der mindestens der Stärke des Garns (Y) entspricht.

10. Rundballenpresse nach Anspruch 8, **dadurch gekennzeichnet,** dass das Garn-Widerlager (C) ein mit einem Ende (14) festgelegter Rundbolzen (13) oder ein Rohrstück ist.

11. Rundballenpresse nach Anspruch 10, **dadurch gekennzeichnet,** dass am Fadenführer eine Konsole (10) angebracht, vorzugsweise angeschweißt, ist, in der die Schneidklinge (K), vorzugsweise austauschbar oder/und verstellbar, gehaltert ist, und dass die Konsole (10) eine bezüglich des Auslasses (8) des Fadenführers (F) außermittige Stützlasche (10') trägt, an der der das Garn-Widerlager (C) bildende Rundbolzen (13) festgeschweißt ist.

12. Rundballenpresse nach Anspruch 11, **dadurch gekennzeichnet,** dass die Konsole (10) an einer Manschette (21) angeordnet ist, die, vorzugsweise abnehmbar und/oder einstellbar, das als Rohrabschnitt (9) ausgebildete Auslassende des Fadenführers (F) umspannt und an diesem festgelegt ist.

## Claims

1. Roll baler (R), having a pressing chamber (KA) and a yarn binding apparatus (G), which includes at least one yarn guiding means (F), which is drivable for a reciprocating movement with a component motion substantially parallel at least to the axis of the pressing chamber, by means of which yarn binding apparatus at least one yarn (Y), introduced into the pressing chamber (KA), can be applied to a rolled bale (B), which rotates in the pressing chamber, and having a yarn cutting apparatus (S), in which at least one cutting blade (K), disposed on the yarn guiding means (F) in a fixed position, can be brought by the movement of the yarn guiding means (F) to a predetermined cutting position for the severing engagement in the travel path of the yarn to the rolled bale, characterised in that, in its fixed position on the yarn guiding means (F), the cutting blade (K) points with a cutting edge (12) towards the yarn (Y) emerging from this yarn guiding means, in that the yarn (Y) is deflectable relative to an outlet (8) of the yarn guiding means (F) by means of the driven yarn guiding means (F) itself or/and by means of a deflecting element (19), which is aligned with the path of movement of the yarn by its yarn guiding means, and in that the yarn (Y), emerging from this yarn guiding means, can be brought for the severing engagement on the cutting blade (K) exclusively by a predetermined deflection of yarn relative to the outlet (8).

2. Roll baler according to claim 1, characterised in that an arrangement (C, 19) for the temporary acceleration of the deflection of the yarn (Y) relative to the outlet (8) is associated with the yarn guiding means (F).

3. Roll baler according to claim 1, characterised in that the yarn guiding means (F) is pivotable, relative to the rolled bale (B), into the cutting position (I).

4. Roll baler according to claim 1, characterised in that the yarn guiding means (F) is displaceable into the cutting position substantially parallel to itself, when viewed with respect to the axial direction of the rolled bale (B), and relative to the deflecting element (19) for the yarn (Y).

5. Roll baler according to claim 1, characterised in that the deflecting element (19) is disposed in a stationary manner in a predetermined position, and in that the yarn guiding means (F) is displaceable into the cutting position beyond the position of the deflecting element (19) by means of its outlet (8).

6. Roll baler according to claim 1, characterised in that the deflecting element (19) is displaceable in the opposite direction to the yarn guiding means (F).

7. Roll baler according to claim 1, characterised in that the cutting blade (K) is disposed in a plane which, in the cutting position, substantially bisects the angle of deflection (α) between the longitudinal axis of the yarn guiding means (F) and the axis of the yarn (Y) emerging from the outlet (8).

8. Roll baler according to claim 2, characterised in that a yarn supporting member (C) is provided on the side of the cutting blade (K) remote from the outlet (8) and has a guide flank which includes a deflecting flank portion (16) lying approximately parallel to the cutting edge - when viewed from the outlet (8) via the cutting edge (12) - and a sliding flank portion (17) sloping relative to the cutting edge (12) - when viewed in the direction along the longitudinal axis of the yarn guiding means (F) - the deflecting flank portion (16) preferably appearing slightly opposite the cutting edge (12).

9. Roll baler according to claim 8, characterised in that the yarn supporting means (C) is secured in a freely protruding manner by its end (15), which is closer to the cutting edge (12), and extends at most over the length of the cutting edge (12), and in that the free end (15) of the yarn supporting means (C) lies at a spacing from the cutting blade (K) corresponding to at least the thickness of the yarn (Y).

10. Roll baler according to claim 8, characterised in that the yarn supporting means (C) is a round pin (13), which is secured by one end (14), or is a tubular part.

11. Roll baler according to claim 10, characterised in that a bracket (10) is mounted on the yarn guiding means, preferably welded thereto, the cutting blade (K) being mounted in said bracket, preferably in an exchangeable manner or/and in a displaceable manner, and in that the bracket (10) carries a supporting lug (10'), which is eccentric relative to the outlet (8) of the yarn guiding means (F), and to which is firmly welded the round pin (13), which forms the yarn supporting means (C).

12. Roll baler according to claim 11, characterised in that the bracket (10) is disposed on a sleeve (21) which, preferably in a removable manner and/or in an adjustable manner, clamps around the outlet end of the yarn guiding means (F), configured as tubular portion (9), and is secured to said guide means.

## Revendications

1. Presse à balles rondes (R) avec une chambre de pression (KA) et un dispositif de liage de fil (G) présentant au moins un guide-fil (F) pouvant être entraîné selon un mouvement de va-et-vient avec une composante de mouvement à peu près parallèle au moins à l'axe de la chambre de pression, au moyen duquel au moins un fil (Y) introduit dans la chambre de pression (KA) peut être appliqué sur une balle ronde (B) tournant dans la chambre de compression, et avec un dispositif de coupe de fil (S) dans lequel au moins une lame de coupe (K) disposée au guide-fil (F) dans une position fixe, peut être amenée par le mouvement du guide-fil (F) jusque dans une position de coupe prédéterminée pour l'engagement coupant dans le parcours du fil vers la balle ronde, caractérisée en ce que la lame de coupe (K) dans sa position fixe présente au guide-fil (F) une arête de coupe (12) pour le fil (Y) sortant de ce guide-fil, en ce que le fil (Y) peut être dévié au moyen du guide-fil entraîné (F) lui-même et/ou d'un élément de déviation (19) orienté vers le trajet de déplacement du fil avec son guide-fil relativement à une sortie (8) du guide-fil (F), et en ce que le fil (Y) sortant de ce guide-fil peut être amené à la lame de coupe (K) exclusivement par une déviation de fil prédéterminée relativement à la sortie (8), en vue d'un engagement de séparation.

2. Presse à balles rondes selon la revendication 1, caractérisée en ce qu'il est associé au guide-fil (F) une installation (C, 19) pour l'accélération temporaire de la déviation du fil (Y) relativement à la sortie (8).

3. Presse à balles rondes selon la revendication 1, caractérisée en ce que le guide-fil (F) peut être amené à pivoter relativement à la balle ronde (B) jusque dans la position de coupe (1).

4. Presse à balles rondes selon la revendication 1, caractérisée en ce que le guide-fil (F) est déplaçable sensiblement parallèlement à lui-même dans la direction d'axe de la balle ronde (B) et relativement à l'élément de déviation (19) pour le fil (Y) jusque dans la position de coupe.

5. Presse à balles rondes selon la revendication 1, caractérisée en ce que l'élément de déviation (19) est disposé d'une manière stationnaire dans une position prédéterminée, et en ce que le guide-fil (F) avec sa sortie (8) est déplaçable au-delà de la position de l'élément de déviation (19) dans la position de coupe.

6. Presse à balles rondes selon la revendication 1, caractérisée en ce que l'élément de déviation (19) est déplaçable en sens inverse au guide-fil (F).

7. Presse à balles rondes selon la revendication 1, caractérisée en ce que la lame de coupe (K) est disposée dans un plan qui, en position de coupe, divise à peu près par moitié l'angle de déviation (A) entre l'axe longitudinal du guide-fil (F) et l'axe du fil (Y) sortant de la sortie (8).

8. Presse à balles rondes selon la revendication 2, caractérisée en ce qu'il est prévu au côté de la lame de coupe (K) éloignée de la sortie (8) une butée de fil (C) avec un flanc de guidage qui présente, en regardant depuis la sortie (8) sur l'arête de coupe (12), une partie de flanc de chasse (16) approximativement parallèle à l'arête de coupe et, en regardant le long de l'axe longitudinal du guide-fil (F), une partie de flanc de glissement (17) oblique relativement à l'arête de coupe (12), où de préférence, la partie de flanc de chasse (16) fait saillie légèrement par rapport à l'arête de coupe (12).

9. Presse à balles rondes selon la revendication 8, caractérisée en ce que la butée de fil (C) est fixée d'une manière librement saillante avec son extrémité (15) plus proche de l'arête de coupe (12) et s'étend tout au plus sur la longueur de l'arête de coupe (12), et en ce que l'extrémité libre (15) de la butée de fil (C) se situe à une distance de la lame de coupe (K) qui correspond au moins à l'épaisseur du fil (Y).

10. Presse à balles rondes selon la revendication 8, caractérisée en ce que la butée de fil (C) est un boulon rond (13) ou une pièce tubulaire fixé avec une extrémité (14).

11. Presse à balles rondes selon la revendication 10, caractérisée en ce qu'il est disposé, de préférence soudé au guide-fil une console (10) dans laquelle la lame de coupe (K) est retenue de préférence d'une manière échangeable et/ou ajustable, et en ce que la console (10) porte une languette d'appui (10') excentrée relativement à la sortie (8) du guide-fil (F) à laquelle est soudé le boulon rond (13) constituant la butée de fil (C).

12. Presse à balles rondes selon la revendication 11, caractérisée en ce que la console (10) est disposée à une manchette (21) qui est de préférence retirable et/ou ajustable, qui entoure l'extrémité de sortie du guide-fil (F) réalisée comme tronçon tubulaire (9) et est fixée à celle-ci.
